# EUROPÄISCHE PATENTSCHRIFT

(11) **EP 0 423 503 B1**
(45) Veröffentlichungstag und Bekanntmachung des Hinweises auf die Patenterteilung: **03.03.1993**
(21) Anmeldenummer: 90118253.5
(22) Anmeldetag: 22.09.1990
(51) Int. Cl.: B65G 49/06

(54) **Glastransportgestell**
Glass transporting rack
Echafaudage pour le transport de verre

(30) Priorität: 19.10.1989 DE 8912415 U
(43) Veröffentlichungstag der Anmeldung: 24.04.1991
(73) Patentinhaber: HEINRICH KERSCHGENS, STAHLKONSTRUKTIONEN GmbH, D-52222 Stolberg (DE)
(72) Erfinder: Springer, Peter, D-5100 Aachen (DE)
(74) Vertreter: König, Werner, Dipl.-Ing.

(56) Entgegenhaltungen:
- EP-A- 0 084 858
- EP-A- 0 190 744

## Beschreibung

Die Erfindung betrifft ein Glastransportgestell mit einem sich über seine gesamte Länge erstreckenden Fachwerkträger, an dem eine Reihe von parallel zueinander angeordneten A-förmigen Anlageböcken, deren Schenkel je zwei nach oben hin aufeinanderzu geneigte Anlageflächen für Glastafeln bilden, sowie quer zur Längsrichtung des Gestells verlaufende, Auflager für die Glastafeln bildende Basisschienen abgestützt sind (siehe zum Beispiel EP- A - 84 858).

Derartige Glastransportgestelle sind bereits als Innenladergestelle bekannt, die auf Tragfüßen stehend von einem Transportfahrzeug in einem gegenüber der Fahrstellung abgesenkten Zustand aufgenommen und abgesetzt werden können. Dabei ist es bereits bekannt, die Anlageböcke jeweils in einen unteren, feststehenden Abschnitt und einen oberen, über dem feststehende Abschnitt gelagerten Schwenkabschnitt zu unterteilen. Auf diese Weise kann erreicht werden, daß bei einem solchen Gestell dann, wenn keine Glastafeln zu transportieren sind, die oberen Abschnitte der Anlageböcke umgeklappt werden können und somit schuppenartig übereinander zu liegen kommen. Auf diese Weise wird der von einem solchen Gestell eingenommene Raum erheblich reduziert, und es wird möglich, oberhalb des Gestells eine Zuladung zu transportieren. Das Umklappen der schwenkbaren oberen Abschnitte der Anlageböcke erfolgt dabei über Seilzüge.

Bei diesen bekannten Glastransportgestellen ist es nachteilig, daß durch die Teilung der Anlageböcke in einen unteren und einen oberen Abschnitt Sprünge in den Anlageflächen für die Glastafeln entstehen. Derartige Sprünge in den Anlageflächen führen zu unerwünschten Abweichungen der an den Glastafeln auftretenden Flächenpressungen und zu Verwindungen. Beschädigungen oder Zerstörungen der Glastafeln können die Folge sein.

Die Aufgabe der vorliegenden Erfindung besteht nun darin, ein Glastransportgestell zu schaffen, an dem durch Umklappen der Anlageböcke in einfacher Weise der Platzbedarf für ein unbeladenes Glastransportgestell weiter reduziert werden kann und das kontinuierliche Anlageflächen für die Glastafeln gewährleistet.

Diese Aufgabe wird bei einem Glastransportgestell der eingangs erwähnten Art erfindungsgemäß dadurch gelöst, daß jeder A-förmige Anlagebock außerhalb des Fachwerkträgers um eine quer zur Längsrichtung des Gestells und parallel zu den Basisschienen verlaufende Schwenkachse als Ganzes schwenkbar gelagert ist und die Schwenkachse in der Höhe des oberen Bereichs des Fachwerkträgers liegt und daß die Füße der Anlageböcke in aufgestelltem Zustand jeweils mit einer Arretiervorrichtung zusammenarbeiten.

Dabei werden die Anlageböcke jeweils in ihrer Gesamtheit geschwenkt, so daß die Anlageflächen der Schenkel keine Sprünge derart aufweisen können, daß sich hier voneinander abweichende Flächenpressungen an den Glastafeln ergeben. Der Schwenkpunkt der einzelnen Anlageböcke liegt mit Abstand über den Fußenden. Dies bedeutet, daß zum Schwenken relativ geringe Kräfte erforderlich sind. Die Arretiervorrichtung sichert die Anlageböcke in der aufgestellten Position.

Das erfindungsgemäße Glastransportgestell kann ferner so ausgebildet sein, daß an beiden Schenkeln jedes Anlagebockes in der gleichen Axialrichtung vorstehende Lageransätze vorgesehen sind, die eine auf der Schwenkachse sitzende Lagerbohrung haben. Dadurch wird erreicht, daß jeder Anlagebock für sich in eine parallel zur Aufstandsfläche des Glastransportgestells verlaufende Ebene gebracht werden kann.

Das erfindungsgemäße Glastransportgestell kann ferner so ausgebildet sein, daß die Lageransätze von den Schenkeln jeweils in Richtung auf eine quer zur Längsrichtung des Gestells verlaufende Mittelebene vorstehen. Dabei sind die Anlageböcke der einen Hälfte des Gestells nach rechts und die anderen entsprechend nach links umklappbar. Der jeweils in Fahrtrichtung am weitesten vorn liegende Anlagebock des Glastransportgestells, an dem regelmäßig keine Glastafeln zur Anlage kommen, hat dabei vorzugsweise einen feststehenden unteren Abschnitt und einen schwenkbaren oberen Abschnitt. Dadurch wird vermieden, daß nach Umklappen der Anlageböcke die unteren Abschnitte nach vornüber das Glastransportgestell hinaus vorstehen.

Das erfindungsgemäße Glastransportgestell kann ferner so ausgebildet sein, daß der Abstand der Lagerbohrungen der Lageransätze von den zugehörigen Schenke ln auf der einen Seite der Mittelebene mindestens um die Breite der Schenkel größer ist als dieser Abstand auf der anderen Seite der Mittelebene. Auf diese Weise ist es möglich, alle einerseits der Mittellinie angeordneten Anlageböcke in eine Ebene parallel zur Aufstandsfläche des Glastransportgestells zu legen und die auf der anderen Seite der Mittelebene befindlichen Anlageböcke in eine Ebene umzuklappen, die oberhalb der Ebene der anderen Anlageböcke und parallel zu dieser liegt.

Das erfindungsgemäße Glastransportgestell kann ferner so ausgebildet sein, daß an den Füßen der Anlageböcke jeweils ein Sperrbolzen angeordnet ist, der mit einem federbeaufschlagten Schnäpper zusammenarbeitet. Die Betätigung des Schnäppers kann dabei mit einem Fuß erfolgen.

Schließlich entspricht es einem weiteren Vorschlag der Erfindung, daß das Glastransportgestell als Innenladergestell ausgebildet sein kann.

Im folgenden Teil der Beschreibung wird eine Ausführungsform des erfindungsgemäßen Glastransportgestells anhand von Zeichnungen beschrieben. Es zeigt:
Fig.1: eine Stirnansicht auf ein als Innenladergestell ausgebildetes Glastransportgestell,
Fig.2: eine Seitenansicht des Glastransportgestells nach Fig.1,
Fig.3: eine Draufsicht auf das Glastransportgestell nach Fig.2, wobei die Anlageböcke umgeklappt sind,
Fig.4: eine Teilansicht auf einen Schenkel eines Anlagebockes mit einem Ansatz für die Lagerung,
Fig.5: einen Teilschnitt nach der Linie 5 - 5 in Fig.4,
Fig.6: eine Seitenansicht einer Arretiervorrichtung für den Fuß eines Anlagebocks und
Fig.7: eine Schnittansicht der Arretiervorrichtung nach der Linie 7 - 7 in Fig.6.

Das in den Figuren dargestellte Glastransportgestell hat einen Fachwerkträger 1, der hier als Viergurt ausgebildet ist. Er hat zwei untere Gurtelemente 2 und zwei obere Gurtelemente 3. Die Gurtelemente 2, 3 sind untereinander durch Streben 4 verbunden.

Die unteren Gurtelemente 2 sind mit Basisschienen 5 und Auflageschienen 6 fest verbunden. Es sind Standfüße 7 vorgesehen.

In den oberen Gurtelementen 3 ist eine Schwenkachse 8 gelagert, die über die Gurtelemente 3 hinaus beiderseits vorsteht.

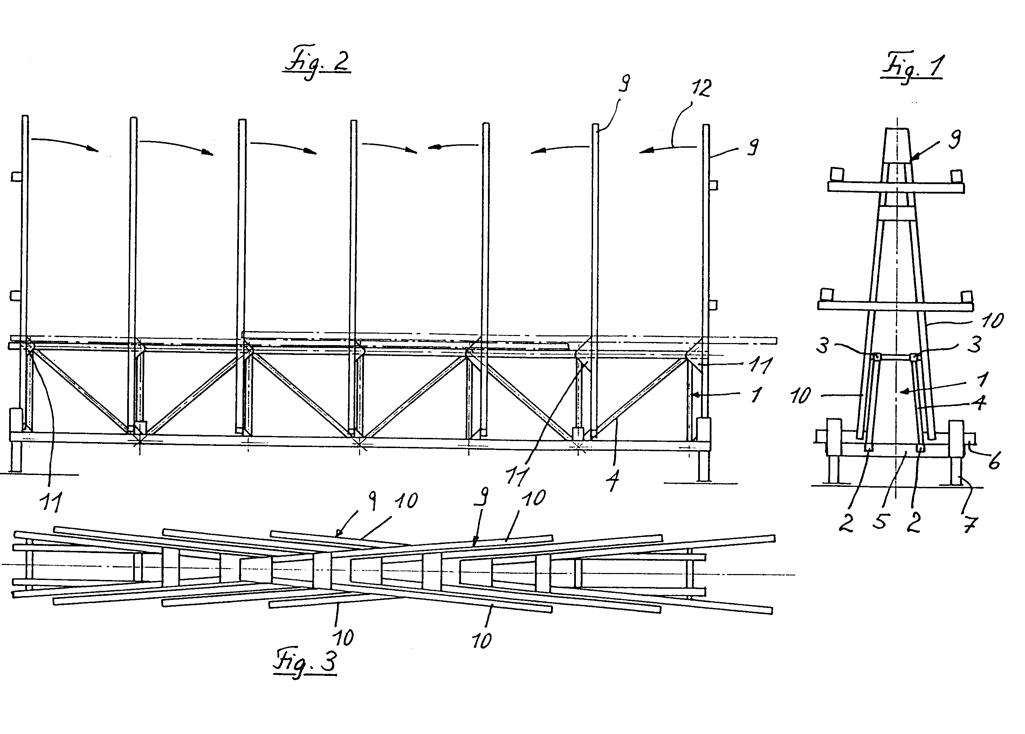

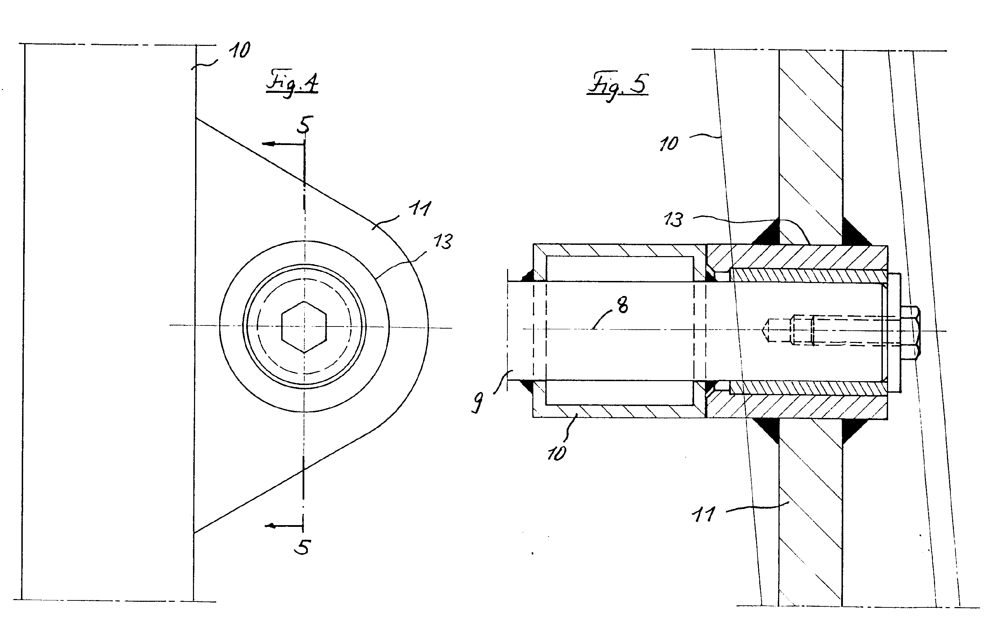

Das Glastransportgestell hat eine Reihe von parallel zueinander verlaufenden A-förmigen Anlageböcken 9, deren Schenkel 10 Auflageflächen für zu transportierende Glastafeln bilden. An den Schenkeln 10 der Anlageböcke 9 sind jeweils Lageransätze 11, vorgesehen, die plattenförmig ausgebildet sind. Diese Lageransätze 11 stehen in der dargestellten Ausführungsform gemäß Fig.2 bei den vier am weitesten links angeordneten Anlageböcken 9 nach rechts und bei den drei am weitesten rechts angeordneten Anlageböcken 9 nach links vor. Sie sind also jeweils auf eine Mittelebene hin gerichtet, die quer zur Längsrichtung des Glastransportgestells verläuft.

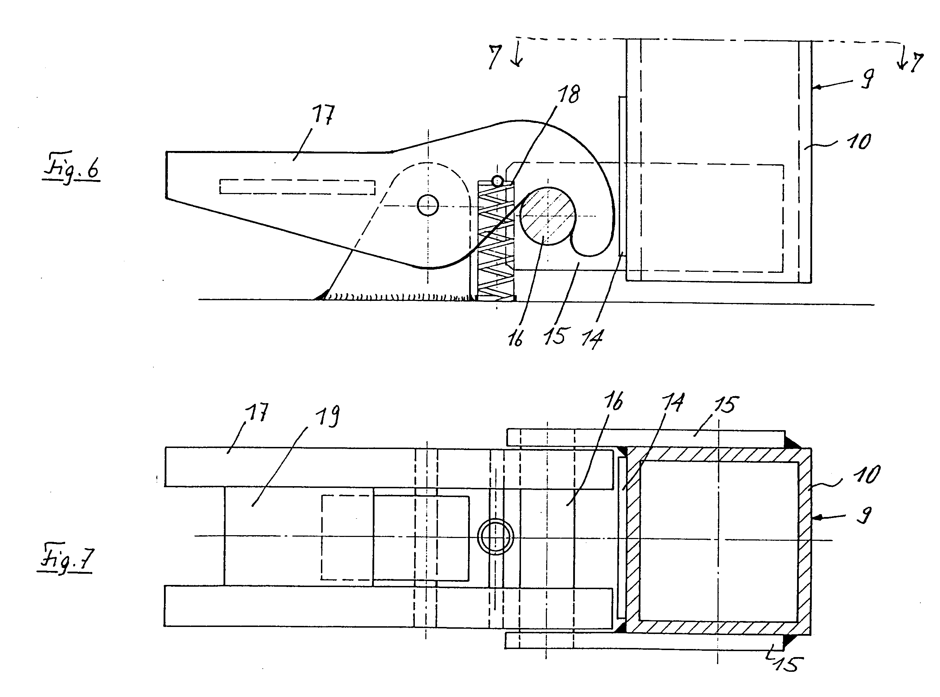

Die Lageransätze 11 eines Anlagebocks 9 sind jeweils auf einer Schwenkachse 8 gelagert, wie dies insbesondere in Fig.4, 5 dargestellt ist. Dies bedeutet, daß die Anlageböcke 9 in Richtung der Pfeile 12 umgeklappt werden können, wobei die Schenkel 10 aufgrund der Lageransätze 11 in umgeklappter Position jeweils oberhalb der Schwenkachse 8 liegen.

Wie Fig.2 zeigt, ist der Abstand von Lagerbohrungen 13 in den Lageransätzen 11 zum zugehörigen Schenkel 10 bei den drei am weitesten rechts angeordneten Anlageböcken 9 größer als bei den vier am weitesten links angeordneten Anlageböcken. Der Unterschied dieses Abstandes ist etwa gleich der Breite eines Schenkels 10. Aus dieser Anordnung der Lagerbohrungen 13 ergibt sich, daß die vier in Fig.2 am weitesten links dargestellten Anlageböcke 9 in eine parallel zur Aufstandsfläche des Glastransportgestells verlaufende Ebene geklappt werden können und daß es dann möglich ist, die drei in Fig.2 am weitesten rechts abgebildeten Anlageböcke 9 in eine gemeinsame Ebene umzuklappen, die parallel oberhalb der Ebene der anderen Anlageböcke 9 liegt.

Wenn der Abstand zwischen den Anlgeböcken 9 es erfordert, dann kann der in Fig. 2 am weitesten links angeordnete der entgegen dem Uhrzeigersinn klappbaren Anlageböcke 9 zunächst ein wenig im Uhrzeigersinn geklappt werden, um für den am weitesten rechts angeordneten der im Uhrzeigersinn klappbaren Anlageböcke 9 Raum zum Umlegen zu schaffen.

Nach dem Umklappen der Anlageböcke 9 dieses Glastransportgestells liegen die Anlageböcke 9 in zwei parallelen Ebenen und erfordern somit den denkbar geringsten Stauraum.

Die in den Figuren 6, 7 dargestellte Arretiervorrichtung zeigt den Fuß eines Schenkels 10 eines Anlagebockes 9. Dieser Fuß ist mit einer Prallplatte 14 verstärkt. Er trägt über Laschen 15 einen Sperrbolzen 16, der mit einem Schnäpper 17 zusammenarbeitet, welcher aus zwei im wesentlichen gleichen Schnäpperelementen besteht, die durch ein Stegblech 19 miteinander verbunden sind. Eine Feder 18 beaufschlagt den Schnäpper 17 in Sperrichtung. Durch Auftreten mit dem Fuß kann der Schnäpper 17 von dem Sperrbolzen 16 gelöst werden, so daß der zugehörige Anlagebock 9 umgeklappt werden kann.

Der Sperrbolzen 16 kann auf der beim Aufstellen der Anlageböcke 9 in Schwenkrichtung vorn liegenden Seite des des Schenkels 10 oder auf einer normal dazu verlaufenden Seite sitzen und mit einem entsprechend angeordneten Schnäpper 17 zusammenarbeiten.

Die Erfindung ist grundsätzlich bei allen Glastransportgestellen anwendbar, welche A-förmige Anlageböcke haben. Sie eignet sich insbesondere für Innenladergestelle.

## Patentansprüche

1. Glastransportgestell mit einem sich über seine gesamte Länge erstreckenden Fachwerkträger (1), an dem eine Reihe von parallel zueinander angeordneten A-förmigen Anlageböcken (9), deren Schenkel je zwei nach oben hin aufeinanderzu geneigte Anlageflächen für Glastafeln bilden, sowie quer zur Längsrichtung des Gestells verlaufende, Auflager für die Glastafeln bildende Basisschienen (5) abgestützt sind, **dadurch gekennzeichnet**, daß jeder A-förmige Anlagebock (9) außerhalb des Fachwerkträgers (1) um eine quer zur Längsrichtung des Gestells und parallel zu den Basisschienen (5) verlaufende Schwenkachse (8) als Ganzes schwenkbar gelagert ist und die Schwenkachse (8) in der Höhe des oberen Bereichs des Fachwerkträgers (1) liegt und daß die Füße der Anlageböcke (9) in aufgestelltem Zustand jeweils mit einer Arretiervorrichtung (16,17) zusammenarbeiten.

2. Glastransportgestell nach Anspruch 1, dadurch gekennzeichnet, daß an beiden Schenkeln (10) jedes Anlagebockes (9) in der gleichen Axialrichtung vorstehende Lageransätze (11) vorgesehen sind, die eine auf der Schwenkachse (8) sitzende Lagerbohrung (13) haben.

3. Glastransportgestell nach Anspruch 2, dadurch gekennzeichnet, daß die Lageransätze (11) von den Schenkeln (10) jeweils in Richtung auf eine quer zur Längsrichtung des Gestells verlaufende Mittelebene vorstehen.

4. Glastransportgestell nach Anspruch 3, dadurch gekennzeichnet, daß der Abstand der Lagerbohrungen (13) der Lageransätze (11) von den zugehörigen Schenkeln (10) auf der einen Seite der Mittelebene mindestens um die Breite der Schenkel (10) größer ist als dieser Abstand auf der anderen Seite der Mittelebene.

5. Glastransportgestell nach einem der vorhergehenden Ansprüche, dadurch gekennzeichnet, daß an den Füßen der Anlageböcke (9) jeweils ein Sperrbolzen (16) angeordnet ist, der mit einem federbeaufschlagten Schnäpper (17) zusammenarbeitet, so daß Sperrbolzen und Schnäpper die Arretiervorrichtung bilden.

6. Glastransportgestell nach einem der vorhergehenden Ansprüche, dadurch gekennzeichnet, daß es als Innenladergestell ausgebildet ist.

## Claims

1. Glass transporting rack with a lattice truss structure (1) extending along its entire length, said structure supporting a row of A-shaped trestles (9) arranged in parallel with one another, the flanks of each trestle forming two supporting surfaces for glass panes which are inclined towards one another in upward direction, and base rails (5) which run transversely to the longitudinal direction of the rack and form supports for the glass panes, **characterised in that** each A-shaped trestle (A) is installed as a single, pivoted unit outside of the lattice truss structure (1), on a swivel axle (8) running at right-angles to the longitudinal direction of the rack and parallel to the base rails (5), whereby the swivel axle (8) is located at the height of the upper section of the lattic truss structure (1), and that the legs of the trestles 19) each work together with a locking device (16, 17) in erected state.

2. Glass transporting rack in accordance with Claim 1, characterised in that bearing attachments (11) projecting in the same axial direction are provided on both flanks (10) of each trestle (9), said attachments having a bearing hole (13) located on the swivel axle (8).

3. Glass transporting rack in accordance with Claim 2, characterised in that the bearing attachments (11) each protrude from the flanks (10) in the direction of a middle plane running transversely to the longitudinal direction of the rack.

4. Glass transporting rack in accordance with Claim 3, characterised in that the distance of the bearing holes (13) of the bearing attachments (11) from the appurtenant flanks (10) on one side of the centre plane is at least one flank (10) width greater than this distance on the other side of the centre plane.

5. Glass transporting rack in accordance with one of the preceding claims, characterised in that a locking pin (16) is installed on the legs of each trestle (9), said locking pin operating in conjunction with a spring-loaded catch (17) in such a manner that locking pin and catch form the locking device.

6. Glass transporting rack in accordance with one of the preceding claims, characterised in that it is configured as an inside-loader rack.

## Revendications

1. Echafaudage pour le transport du verre comportant un support de charpente (1) s'étendant sur toute sa longueur sur lequel sont placés une série de chevalets d'entreposage en A (9) parallèles entre eux dont les côtés forment une fois sur deux des surfaces d'entreposage des plaques de verre inclinées, ainsi que de rails de base (5) placés perpendiculairement à la longueur du dispositif formant support pour les plaques de verre, **caractérisé en ce que** chaque chevalet d'entreposage (9) est entièrement articulé à l'extérieur du support de charpente (1) sur un axe de pivotement (8) perpendiculaire à l'échafaudage et parallèle aux rails de base (5). L'axe de pivotement (8) se trouve sur la hauteur de la partie supérieure du support de charpente (1). Les pieds des chevalets d'entreposage (9) en position montée fonctionnent avec un dispositif d'arrêt (16,17).

2. Echafaudage pour le transport du verre selon la revendication 1, caractérisé en ce que les deux côtés (10) de chaque chevalet d'entreposage (9) présentent des couvercles de roulement disposés dans la même direction axiale et qui présentent un alésage de roulement (13) sur l'axe de pivotement (8).

3. Echafaudage pour le transport du verre selon la revendication 2, caractérisé en ce que les couvercles de roulement (11) se trouvent devant les côtés (10) dans la direction d'un plan moyen perpendiculaire à la longueur de l'échafaudage.

4. Echafaudage pour le transport du verre selon la revendication 3, caractérisé en ce que l'écart entre les alésages de roulement (13) dans les couvercles de roulement (11) et le côté correspondant (10) d'un côté d'un plan médian est plus large d'une dimension au moins égale à la largeur du côté (10) que celui qui existe sur l'autre côté du plan médian.

5. Echafaudage pour le transport du verre selon l'une des revendications ci-dessus, caractérisé en ce que sur chaque pied des chevalets d'entreposage (9) est placée une cheville d'arrêt (16) qui fonctionne avec un cliquet à ressort (17) de sorte que la cheville d'arrêt (16) et le cliquet forment un dispositif d'arrêt.

6. Echafaudage pour le transport du verre selon l'une des revendications ci-dessus, caractérisé en ce qu'il est réalisé pour le chargement de l'intérieur.
